# EUROPEAN PATENT APPLICATION

(11) **EP 1 437 820 A1**
(43) Date of publication of application: **14.07.2004**
(21) Application number: 04250107.2
(22) Date of filing: 12.01.2004
(51) Int. Cl.: H02K 5/14

(54) **Brush holder**

(30) Priority: 13.01.2003 US 340985
(71) Applicant: Morganite Incorporated, Dunn, NC 28334 (US)
(72) Inventor: Southall, Otway Archer, Farmville Virginia 23901 (US); Farthing, Alvin Leon, Roseboro North Carolina 28382 (US); Shull, Dan L., Cameron North Carolina 28326 (US)
(74) Representative: Weston, Robert Dale

(57) **Abstract**

An electrical brush holder comprising a brush slideable in a brush box (16, 18) in the brush holder (12, 14), first spring means (26, 34, 28, 36) mounted on the brush holder to bias the brush against an electrical contact surface (37) and brush retention means (38, 40) are mounted on the brush holder (12, 14) in a position to neutralise the biasing effect of the first spring means (26, 34, 28, 36) to keep the brush at least partially retracted within the brush box and to be contactable by the electrical contact surface (37) as it is inserted into the brush holder; to thereby be removed from said neutralising position to free the brush (20, 22) to be biased against the electric contact surface; in a preferred embodiment a torsion spring (26, 28) is mounted on the brush holder (12, 14) and has a first, spring-loading arm (34, 36) arranged to bear against the brush top face (17) and a second, spring-retaining arm (38, 40) arranged to bear against the brush contact face (23).

## Description

### Field of the Invention

This invention relates to electrical brush holders for use with electrical commutators, current collectors, slip rings and the like electrical contact surfaces of electric machines (hereinafter referred to as "an electrical contact surface").

### Background of the Invention

During the manufacture of electric machines such as electric motors or other electrical device using brushes, the electrical contact surface must be inserted into a brush holder to make contact with the brushes. Because the brushes are spring-biased toward the electrical contact surface, something must retain the brushes in the brush holder to allow for the insertion of the electrical contact surface into the brush assembly. A separate disposable or reusable brush retention device is used by the prior art to retain the brushes. For example, in one prior art method, a tube is placed in between the brushes to retain them, then is displaced as the electrical contact surface is inserted. This use of such a tube prevents the insertion of the electrical contact surface into a "blind" hole, e.g. into a closed end brush holder, because the displaced tube must be removed. Alternatively, pins or clips are used to retain the brushes until the electrical contact surface is installed. After installation, the pins or clips must be removed. These methods of manufacture add extra steps, add extra devices to the manufacture of electric machines and do not neutralise the effect of brush biasing springs.

### Prior Art

Document-B1-US 6,340,856 discloses an electric motor wherein a magnet body, having a conical first annular portion 261, causes the carbon brushes 22 to spread apart, so that an additional assembly tool can be dispensed with. Once the commutator motor has been mounted in final form, the magnet body 24 is located directly between the commutator 21 and the spherical bearing 14 (see column 3 lines 36 to 42). The brushes are not retained apart prior to insertion of the magnet body.

### Object of the Invention

It is an object of the present invention to overcome the above-stated problems by providing an electrical brush holder wherein the or each brush can be retained in the holder prior to insertion of a electrical contact surface without the need for additional steps or devices which have to be removed post assembly.

### Statement of Invention

According to the present invention, an electrical brush holder comprises a brush slideable in a brush box in the brush holder, first spring means mounted on the brush holder to bias the brush against an electrical contact surface and brush retention means mounted on the brush holder in a position to neutralise the biasing effect of the first spring means and to keep the brush at least partially retracted within the brush box and to be contactable by the electrical contact surface as it is inserted into the brush holder; to thereby be removed from said neutralising position to free the brush to be biased against the electric contact surface.

The present invention addresses the problems of the previous brush holders by providing a mechanism that retains the brush out of the way during installation of the sliding electrical contact surface; the retaining mechanism remaining on the brush holder. The sliding electrical contact assembly is typically a commutator or slip ring assembly. The present invention allows the commutator or slip ring assembly to be installed blindly and with no additional manufacturing steps associated with retaining the brushes prior to insertion of the commutator or slip ring assembly.

According to an embodiment of the present invention, the brush retention means comprise second spring means mounted on the brush holder so as, in use, to counteract the bias of the first spring means and may be a torsion spring having a first, spring-loading, arm arranged to bear against the brush top and a second, spring-retaining, arm arranged to bear against the brush contact surface. In this embodiment, no additional brush retaining parts are required.

According to another embodiment of the present invention, the brush holder has a camming surface located in the path of the brush retention means; whereby, as the electrical contact surface is inserted into the brush holder, the brush retention means is forced against the camming surface and removed from said neutralising position; the camming surface may terminate in a latching slot; whereby, as the electrical contact surface is further inserted into the brush holder, the brush retention means is carried beyond the camming surface to be retained in the latching slot away from the brush and electrical contact surface.

The above and further features of the present invention are illustrated by the following description and drawings.

### Brief Description of the Figures

- FIG. 1: is an overhead view of a brush box assembly according to the present invention before the installation of a slip ring assembly.
- FIG. 2: is a side view of the brush box assembly of FIG. 1.
- FIG. 3: is an overhead view of the brush box assembly FIG. 1 after the installation of a slip ring assembly.
- FIG. 4: is a side view of the brush box assembly of FIG. 3.

### Detailed Description

The following description is described in terms of an electrical brush holder assembly for use with a slip ring, but is equally applicable to any electric machine having a brush and a sliding electrical contact surface. For example, the present invention is applicable to an electric motor having a commutator assembly, a linear motor, a linear current transfer system, or a system to energize a rotating field coil.

FIGS.. 1 and 2 illustrate a brush holder assembly 10 prior to the installation of a slip ring assembly 37. The brush holder assembly is mounted on a motor end cap 11. The brush holder assembly can, for example, be mounted by either snapping or bolting onto a stationary part of the electric motor. The brush holder assembly is normally made of plastic, but can be made of a ceramic or a plastic with a metal backing.

The brush holder assembly has two brush holders 12, 14 that each have a brush box 16, 18; the brush boxes are normally made of brass or bronze, but can be made of plastic. A brush 20, 22 is slid into each brush box. The brushes 20, 22 have contact faces 19, 23, for contacting a slip ring assembly, and top faces 17, 21. The brushes are prevented from side-to-side movement by the side walls of the brush boxes.

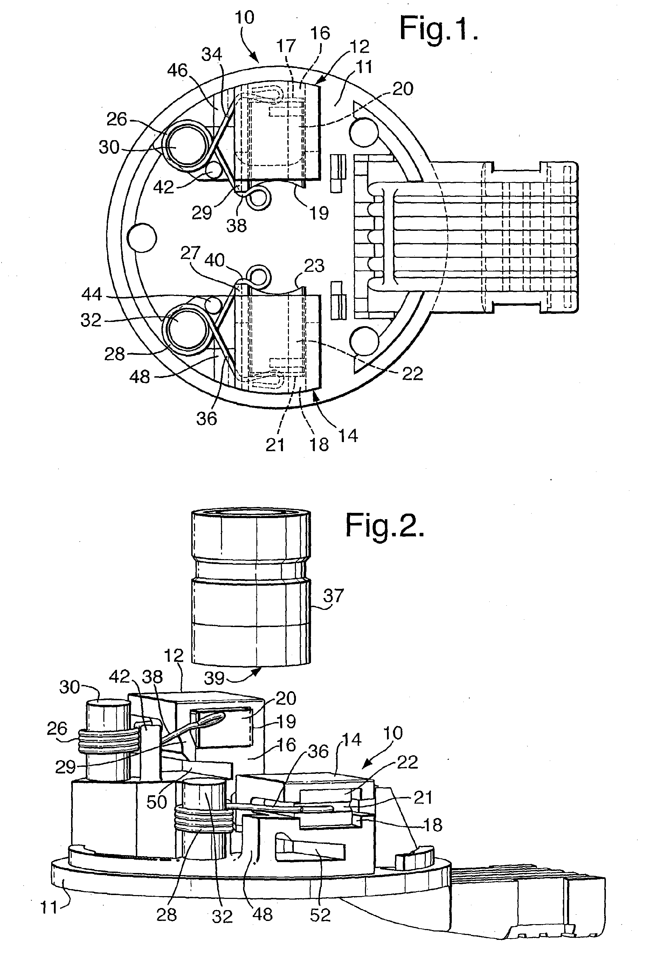

As shown in FIG. 2, the first brush 20 is housed at an axially higher level than the second brush 22, but the brushes could be arranged in a variety of configurations. While the described embodiment has two brushes, the present invention is equally applicable to single or multiple brushes with corresponding brush holders.

Torsion springs 26, 28 are mounted surrounding torsion spring posts 30, 32, which are positioned to the side of the brush boxes 16, 18. One end of each torsion spring has a loading arm 34, 36 contacting the brush top faces 17, 21. The spring-loading arms 34, 36 transmit force from the torsion springs 26, 28, so as to bias the brushes 20, 22 and force them radially inwardly of the brush boxes 16, 18. Prior to insertion of a slip ring assembly 37 into the brush box assembly, this force must be neutralised to, at least partially, retain the brushes 20, 22 in the brush boxes 16, 18.

The other end of each torsion spring 26, 28 has a retaining arm 38, 40 contacting the brush contact faces 19, 23 and applying a neutralising force counter to the biasing force applied by the spring-loading arms 34, 40. The retaining arms 38, 40 are prevented from over-rotation away from the brush contact faces by stop posts 42,44

A camming surface 27, 29 is provided in each brush holder 12, 14 and protrudes radially inwardly and axially downwardly beside each brush box 16, 18. As shown in FIGS. 1 and 2 each retaining arm 38, 40 respectively lies against the radially outer and axially upper end of a camming surface 27, 29. As the slip ring assembly 37 is installed in between the brush holders 12, 14, the plain front face 39 of the slip ring assembly contacts the spring-retaining arms 38, 40 and axial downwards movement of the slip ring assembly pushes the spring-retaining arms 38, 40 down against the camming surfaces; this action forces the spring-retaining arms in a radially inward and axially downward path away from the contact faces 19, 23 of the brushes 20, 22. Continued axial downwards movement of the slip ring assembly forces the spring-retaining arms in a path down and into radially extending slots 50, 52 formed in the brush holders 12, 14; the slots act as spring-retaining arm latches. With the spring-retaining arms off the contact faces 19, 23 of the brushes 20, 22, each spring-loading arm can apply its spring force to the top face 17, 21 of each brush; biasing the brushes in contact with the slip ring.

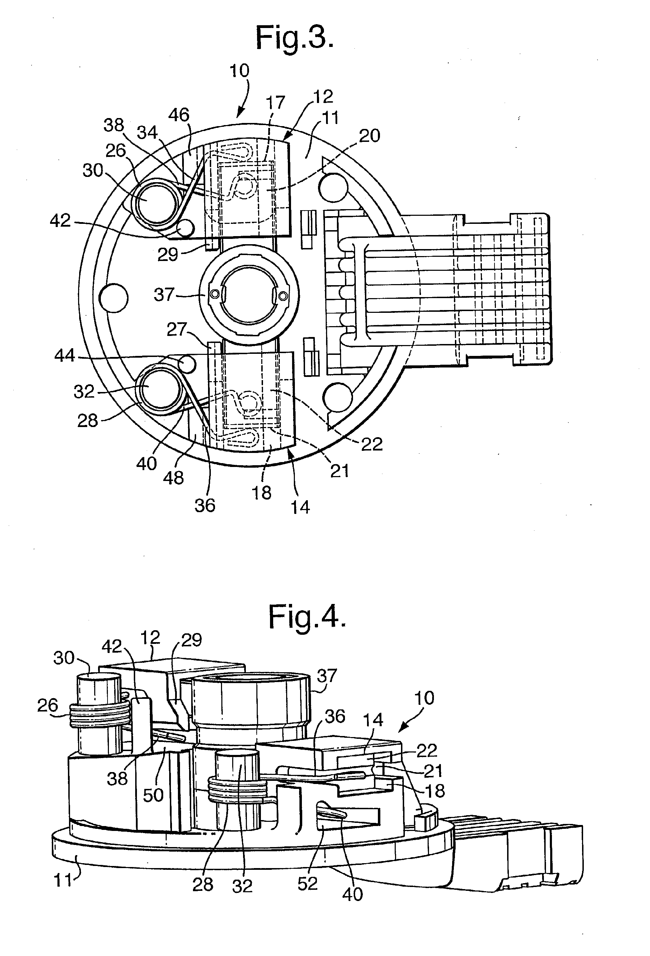

FIGS. 3 and 4 illustrate the brush holder assembly 10 after the slip ring assembly 37 has been installed. The spring-loading arms 34, 36 keep the brushes 20, 22 biased against the slip ring 37 and the spring-retaining arms 38, 40 are latched out of the way in the spring-retaining arm slots 50, 52 (as shown in FIG. 4). Over-rotation of the torsion springs 26, 28 is prevented by the retention spring arms encountering stop sections 46, 48 at the back of each the spring-retaining arm slot 50, 52.

## Claims

1. An electrical brush holder comprising a brush slideable in a brush box (16, 18) in the brush holder (12, 14), first spring means (26, 34, 28, 36) mounted on the brush holder to bias the brush against an electrical contact surface (37) and brush retention means (38, 40) to keep the brush at least partially retracted within the brush box **characterised in that** the brush retention means (38, 40) are mounted on the brush holder (12, 14) in a position to neutralise the biasing effect of the first spring means (26, 34, 28, 36) and to be contactable by the electrical contact surface (37) as it is inserted into the brush holder; to thereby be removed from said neutralising position to free the brush (20, 22) to be biased against the electric contact surface.

2. A holder as claimed in claim 1 and further **characterised in that** the brush retention means comprise second spring means (26, 38, 28, 40) mounted on the brush holder (12, 14) so as, in use, to counteract the bias of the first spring means (26, 34, 28, 36).

3. A holder as claimed in claim 2 and further **characterised in that** the first and second spring means are a torsion spring (26, 28) mounted on the brush holder (12, 14) and having a first, spring-loading arm (34, 36) arranged to bear against the brush top face (17) and a second, spring-retaining arm (38, 40) arranged to bear against the brush contact face (23).

4. A holder as claimed in claim 3 and further **characterised in that** the torsion spring (26, 28) is pivotally mounted on the brush assembly (12, 14) and one or more stops (42, 44, 46, 48) are provided to prevent over-rotation of the torsion spring.

5. A holder as claimed in any of claims 1 to 4 and further **characterised in that** the brush holder (12, 14) has a camming surface (27, 29) located in the path of the brush retention means (38, 40); whereby, as the electrical contact surface (37) is inserted into the brush holder, the brush retention means is forced against the camming surface and removed from said neutralising position.

6. A holder as claimed in claim 5 and further **characterised in that** the camming surface terminates in a latching slot (50, 52); whereby, as the electrical contact surface (37) is further inserted into the brush holder (12, 14), the brush retention means is carried beyond the camming surface (27 29) to be retained in the latching slot away from the brush (20, 22) and electrical contact surface.

7. A brush assembly including a pair of brush holders (12, 14) as claimed in any of claims 1 to 6.

8. An assembly as claimed in claim 7 and further **characterised in that** the brush assembly (10) is mounted on or forms part of the end cap (11) of an electric machine.
